# EUROPEAN PATENT SPECIFICATION

(11) **EP 1 479 658 B1**
(45) Date of publication and mention of the grant of the patent: **09.05.2007**
(21) Application number: 04253018.8
(22) Date of filing: 21.05.2004
(51) Int. Cl.: C04B 41/85, C04B 41/89, C23C 4/04, F01D 5/28

(54) **Gas turbine engine combustor or turbine section**
Brennkammer oder Turbinenteil einer Gasturbinenanlage
Chambre de combustion ou élément de turbine d'un turboréacteur

(30) Priority: 22.05.2003 US 443258
(43) Date of publication of application: 24.11.2004
(73) Proprietor: UNITED TECHNOLOGIES CORPORATION, Hartford Connecticut 06101 (US)
(72) Inventor: Sun, Ellen Y., South Windsor, Connecticut 06074 (US)
(74) Representative: Leckey, David Herbert

(56) References cited:
- EP-A- 1 044 944
- DE-A1- 19 900 182
- US-A- 4 657 825
- US-A- 4 828 934
- CHEMICAL ABSTRACTS, vol. 90, no. 22, 28 May 1979 (1979-05-28), Columbus, Ohio, US; abstract no.: 173510c, XP000185492 & JP 54 001308 A (SUMITOMO ELECTRIC INDUSTRIES) 8 January 1979 (1979-01-08)

## Description

### BACKGROUND OF THE INVENTION

The present invention is drawn to coatings applied to a silicon containing substrate.

Silicon based ceramics exhibit accelerated oxidation rates in high temperature, aqueous environments such as for example, the combustor and turbine sections of gas turbine engines. In order to reduce the rate of oxidation on silicon based substrates used as ceramic components in such environments, significant effort has been given to providing environment barrier coating, i.e., barrier layer(s), for the silicon based substrates so as to increase the service life of such component parts.

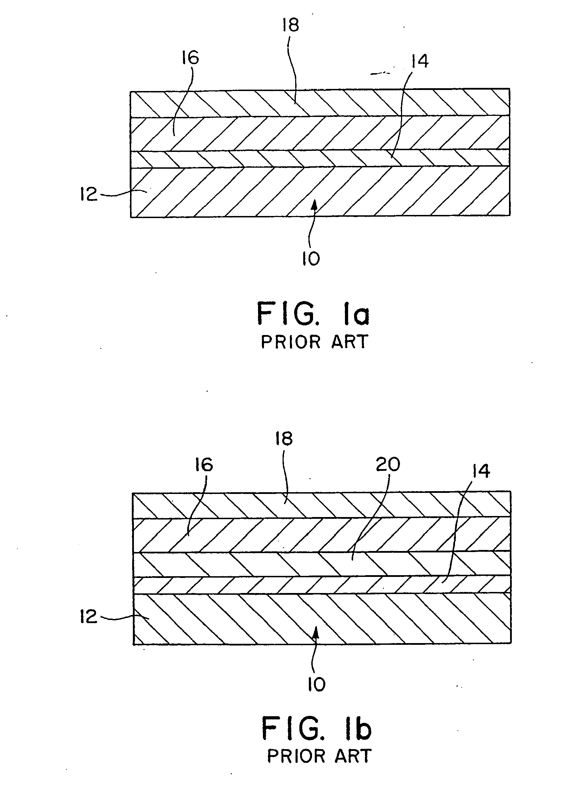

With reference to Figures 1a and 1b, prior art environmental barrier coatings form a composite 10 comprising a silicon based substrate 12, a bond coat or layer 14 which comprises a dense continuous layer of silicon metal, a barrier layer 16 which comprises either an alkaline earth aluminosilicate based on barium and strontium or yttrium silicate or other refractory metal oxide such as oxides of hafnium, aluminum, tantalum and niobium, and a top coat or layer 18 which comprises, a refractory oxide and/or silicate for example, zirconium oxide. In addition, an intermediate layer 20 may be provided between the 14 bond coat and the barrier 16 and/or between the barrier layer 16 and top layer 18. The intermediate layer comprises, for example, a mixture of the barrier layer material with an additional oxide such as mullite. These prior art environmental barrier systems have proved to be protective with respect to oxidation of the silicon based substrate and, in addition, adherent. However, it has now been found that certain mechanical properties of some silicon substrate such as silicon nitride suffer as demonstrated by a significant reduction in 4-point bend strength tests at room temperature. It is believed that the loss of mechanical properties results from the cracking of the bond layer adjoining the silicon containing substrate which causes stress concentrations which initiate cracks in the substrate itself. The cracks in the bond coat or layer arise from many causes including differences in the coefficient of thermal expansion between the substrate and bond layer and stresses introduced as a result of rapid cyclic cooling and heating of the component parts.

Naturally, it would be highly desirable to provide an improved bond coat layer for silicon containing substrates which do not result in significant loss of mechanical properties.

Accordingly, it is a principle object of the present invention to provide a bond coat that does not debit the mechanical properties of the silicon containing substrate.

### SUMMARY OF THE INVENTION

The foregoing object is achieved by the present invention wherein a gas turbine engine combustor or turbine section comprises a silicon based substrate having a bond layer comprising a refractory oxide forming metal having a thickness of between 0.1 to 10 micron. The refractory oxide forming metal is selected from the group consisting of chromium, tantalum, niobium, silicon platinum, hafnium, yttrium, aluminum, zirconium, titanium, rare earth metals, alkaline earth metals and mixtures thereof. A further layer is provided selected from the group consisting of aluminosilicates based on barium and strontium, rare earth silicates, yttrium silicates, oxides of hafnium, aluminum, tantalum and niobium and mixtures thereof.

The advantage of the invention over the prior art is that cracking associated with a dense, continuous silicon layer is eliminated as evidence by flexure tests at room temperature.

Further objects and advantages will appear hereinbelow.

### BRIEF DESCRIPTION OF THE DRAWINGS

Figure 1a and 1b are schematic illustrations of composite articles in accordance with the prior art; and
Figure 2 summarizes 4-point bond test results showing the affect of the bond coat of the present invention.

### DETAILED DESCRIPTION

The present invention relates to an article comprising a silicon based substrate and a bond layer. The bond layer may be applied directly on the silicon based substrate or, alternatively, a silicon oxide intermediate layer or other intermediate layer may be provided between the bond layer and the silicon base substrate.

The silicon containing substrate may be a silicon ceramic substrate or a silicon containing metal alloy. In a preferred embodiment, the silicon containing substrate is a silicon containing ceramic material as, for example, silicon carbide, silicon carbide composite, silicon nitride, silicon nitride composite, silicon oxynitride, silicon aluminum oxynitride and molybdenum and niobium alloys containing silicon.

In accordance with the present invention, the bond layer comprises a refractory oxide forming metal having a thickness of between 0.1 to 10 microns. The refractory oxide forming metal is selected from the group consisting of chromium, tantalum, niobium, silicon, platinum, hafnium, yttrium, aluminum, zirconium, titanium, rare earth metals, alkaline earth metals and mixtures thereof. The thin layer of less than 10 microns can be applied by sputtering techniques or other techniques such as chemical vapor deposition or physical vapor deposition.

The article of the present invention includes further layers such as intermediate layers, a barrier layer or further protective layers. These layers comprise materials consisting of aluminosilicates based on barium and strontium, rare earth silicates, yttrium silicates, oxides of hafnium, aluminum, tantalum and niobium and mixtures thereof. In addition, the intermediate layers and protective layers may comprise barrier layers known in the prior art such as, for example, those disclosed in U.S. patents 5,985,470, 6,296,941, 6,296,942, 6,352,790, and 6,387,456. In addition, any of these layers may be provided with a coefficient of thermal expansion modifier to adjust the coefficient of thermal expansion of the layer to that of adjacent layers. Such a coefficient of thermal expansion modifier (CTE) is disclosed in U.S. patent application SN 10/034,677 filed December 19, 2001 and granted as US patent 6,617,037. The modifier is niobium oxide.

The advantage of the article of the present invention will become clear from consideration of the following example.

### EXAMPLE

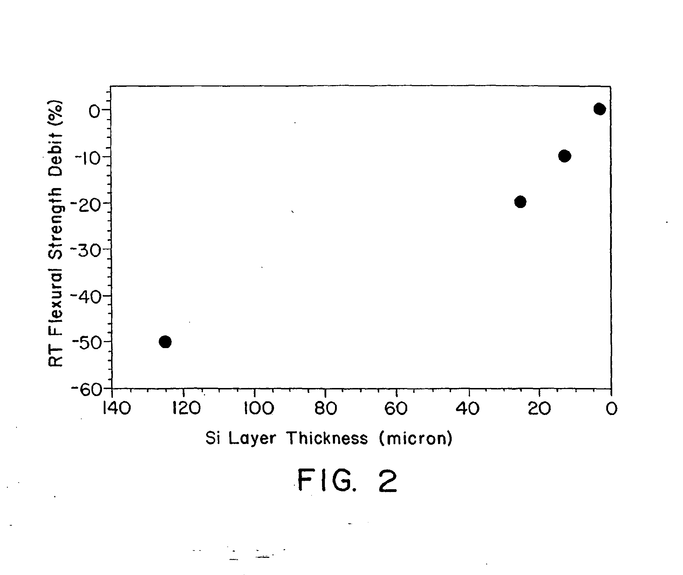

Coatings of the bond layer were fabricated onto coupons of silicon nitride using standard thermal spray techniques to generate coatings thicker than 20 micron and standard sputtering techniques to generate coatings thinner than 20 micron. Thermal spraying was accomplished using argon/hydrogen thermal spray arc gases at approximately 30 kw power level. Sputtering was accomplished using silicon target. The sputtering rig was operated in RF Diode mode with argon gas at 9 mtorr pressure. The silicon nitride substrate coupons were sized according to ASTM C 1164-94 which is a 4-point bend bar test description used to measure conventional 4-point bend strength of materials. A series of bond layer coatings with various coating thickness were fabricated onto the silicon nitride. These coatings were examples of the thin bond layer of the present invention and for the specific example consisted of silicon metal as the bond layer. Figure 2 shows the 4-point bend strength testing results. With a thick silicon bond layer, the bend strength of the silicon nitride is reduced approximately 50% in comparison to the uncoated silicon nitride substrate based strength. However, as the bond layer thickness is reduced, the bend strength increases significantly and even approaches the original uncoated bend strength of the silicon nitride. As can be seen with reference to Figure 2, at a bond layer thickness of 10 microns and less, the flexural strength debit is less than 10%.

It is to be understood that the invention is not limited to the illustrations described and shown herein, which are deemed to be merely illustrative of preferred embodiments of the invention, and which are susceptible of modification of form, size, arrangement of parts and details of operation. The invention rather is intended to encompass all such modifications which are within its scope as defined by the claim.

## Claims

1. A gas turbine engine combustor or turbine section comprising a silicon based substrate (12), a bond layer (14) and a further layer selected from the group consisting of aluminosilicates based on barium and strontium, rare earth silicates, yttrium silicates, oxides of hafnium, aluminum, tantalum and niobium and mixtures thereof;
**characterised in that** the bond layer comprises a refractory oxide forming metal selected from the group consisting of chromium, tantalum, niobium, silicon, platinum, hafnium, yttrium, aluminum, zirconium, titanium, rare earth metals, alkaline earth metals and mixtures thereof and has a thickness of between 0. to 10 microns.

## Patentansprüche

1. Gasturbinenmaschinen-Verbrennungssektion oder -Turbinensektion, aufweisend ein Substrat (12) auf Siliciumbasis, eine Bindungsschicht (14) und eine weitere Schicht, die ausgewählt ist aus der Gruppe, die aus Aluminiumsilicaten auf der Basis von Barium und Strontium, Seltenerdsilicaten, Yttriumsilicaten, Oxiden von Hafnium, Aluminium, Tantal und Niob und Gemischen davon besteht;
**dadurch gekennzeichnet, dass** die Bindungsschicht ein ein hitzebeständiges Oxid bildendes Metall aufweist, das ausgewählt ist aus der Gruppe, die aus Chrom, Tantal, Niob, Silicium, Platin, Hafnium, Yttrium, Aluminium, Zirconium, Titan, Seltenerdmetallen, Erdalkalimetallen und Gemischen davon, besteht, und eine Dicke von zwischen 0,1 bis 10 µm hat.

## Revendications

1. Section de turbine ou chambre de combustion de turbine à gaz comprenant un substrat à base de silicium (12), une couche de liaison (14) et une couche supplémentaire choisie dans le groupe consistant en les aluminosilicates à base de baryum et de strontium, les silicates de terre rares, les silicates d'yttrium, les oxydes d'hafnium, d'aluminium, de tantale, et de niobium et leurs mélanges ;
**caractérisée en ce que** la couche de liaison comprend un métal de formation d'oxyde réfractaire, choisi dans le groupe consistant en le chrome, le tantale, le niobium, le silicium, le platine, l'hafnium, l'yttrium, l'aluminium, le zirconium, le titane, les métaux de terre rares, les métaux alcalino-terreux et leurs mélanges et a une épaisseur comprise de 0,1 à 10 micromètres.
